# EUROPEAN PATENT APPLICATION

(11) **EP 4 675 253 A1**
(43) Date of publication of application: **07.01.2026**
(21) Application number: 24186704.3
(22) Date of filing: 05.07.2024
(51) Int. Cl.: G01N 3/04, G01N 3/08, G01N 3/46, G01N 3/56

(54) **MATERIALS TESTING ASSEMBLY**

(71) Applicant: Alemnis AG, 3645 Gwatt (Thun) (CH)
(72) Inventor: BREGUET, Jean-Marc, 6926 Montagnola (CH); HEIGENHAUSER, Benedikt, 3011 Berne (CH); BODENMANN, Simeon, 3506 Grosshöchstetten (CH); TOMMASINI, Edgar, 3600 Thun (CH)
(74) Representative: Patentsmith SA

(57) **Abstract**

Materials testing assembly (1) comprising:
- a first holder (1) supporting a force sensor (7) adapted to measure force parallel to a first axis (Z);
- a second holder (15) supporting a coupling body (25) suspended by a flexure pivot suspension (27) adapted to provide substantially only one degree of freedom of movement of said coupling body (25) parallel to said first axis (Z),
wherein said coupling body (25) has a first face adapted to be in contact with said force sensor (7) and a second extremity supporting a materials testing tip (17) adapted to cooperate with a sample (19).

## Description

### Technical Field

The present invention relates to the field of materials testing at micrometer or nanometer scales. More particularly, it relates to a materials testing assembly provided with a materials testing tip adapted to carry out tensile, indentation, scratch and/or tribological testing, testing of structures or similar, as well as a force sensor for measuring the forces applied by the materials testing tip to the sample along a first axis.

### State of the Art

It is known in the field of mechanical testing, and in particular in the context of tensile tests, microindentation, nanoindentation, scratch tests (particularly at micrometer and nanometer scales and resolutions) and so on, to integrate a force sensor in a materials testing probe comprising a materials testing tip such as an indenter tip, a scratch tip, a tribological testing tip or similar, in order to measure force applied to a sample by the materials testing tip in a direction parallel to the major axis of the probe (typically referred to as the Z direction, which is also typically perpendicular to the surface of the sample), or in a direction perpendicular to said major axis (typically referred to as the X direction, which is also typically parallel to the surface of the sample and is relevant e.g. in the case of scratch or tribological tests).

Traditionally, the force sensor is integrated with a holder which supports the materials testing tip, with the holder being removably attached to a headstock of a materials testing device and/or the materials testing tip being removably attached to the holder, in which case it is possible to integrate the holder in the headstock. While it is common to be able to exchange the extremity of the tip in order to carry out various different materials tests with appropriately shaped, sized and configured tips, integration of the force sensor in the holder prevents its easy exchange, and may require exchange of the entire holder and tip assembly in order to switch to a different force sensor.

Miniaturization of force sensors and their production by modern microfabrication techniques means that they can be easily manufactured with varying properties, such as stiffness, sensing range etc. It also renders them fragile in operation and in handling.

Furthermore, miniature force sensors, for instance those of rectangular cross-section with a length in the range below 5 mm, preferably below 2 mm, further preferably between 40 µm and 600 µm, and with a width less than 0.5 mm, preferably less than 200 µm, further preferably between 20 µm and 120 µm, and with a thickness less than 50 µm, preferably less than 20 µm, further preferably between 100 nm and 10 µm, are fragile, difficult to integrate with macro-scale tips, and are typically limited to tip sizes of a similar size to their cross section.

The aim of the present invention is hence to at least partially overcome at least some of the above-mentioned drawbacks of the prior art.

### Disclosure of the Invention

More precisely, the invention relates to a materials testing assembly according to claim 1. This materials testing assembly comprises:

- a first holder supporting a force sensor adapted to measure force parallel to a first axis, which may be an indentation axis commonly referred to as the "Z" axis or an axis perpendicular thereto and parallel to a direction of a scratch or tribological test, commonly referred to as the "X" axis;

- a second holder supporting a coupling body supported by a suspension of any convenient type adapted to provide substantially only one degree of freedom of movement of said coupling body. By "substantially only one degree of freedom", it should be understood that the stiffness of the suspension in all directions of translation and rotation other than said one degree of freedom are at least 20 times, preferably at least 50 times, further preferably at least 100 times, greater the stiffness in said one degree of freedom, and the displacement of the coupling body at its point of contact with the force sensor in the direction of the first axis is greater than in any other direction, in the same ratio as said stiffness. In practice, this lies in the region of 30 to 70 times for both stiffness and displacement. Furthermore, the one degree of freedom may be parallel to the first axis, or may be in rotation such that, due to the small-angle approximation, the portion of the coupling body which interacts with said force sensor has a principal component parallel to said first axis. It should be noted that the suspension may be based on rods, hinges, flexure pivots of any convenient type, roller bearings, ball bearings, sliding bearing or any combination thereof arranged in any suitable manner (parallelogram, X-table, Watt's Linkage, etc.).

Said coupling body has a first face (which may be on a first extremity thereof) adapted to be in contact with said force sensor and a second face (which may be on a second extremity thereof) supporting a materials testing tip adapted to cooperate with a sample in order to carry out a materials test such as a tensile, compression, indentation, scratch or tribological test of a simple material sample or a structure, the coupling body being arranged to transmit force to the force sensor substantially parallel to the first axis. This contact is preferably a breakable contact, in other words, the coupling body is not integrated with or fixed directly to the force sensor, but is merely in superficial contact therewith, but the contact may alternatively be fixed via glue, solder, a clamping arrangement or similar. Furthermore, it should be noted that the materials testing tip can be fixed to the coupling body either removably or permanently.

Since the force sensor and the coupling body cooperate by contact, the force sensor and/or the testing tip are easily exchangeable (whether together with the coupling body or separately). Furthermore, the use of an intermediate body means that a materials testing tip that is significantly larger than the distal extremity of the force sensor can be used, rendering the size and type of tip independent of the size of the force sensor, which can be of a very miniaturised type, although the invention is not restricted thereto and can be used with any suitable type of force sensor of any convenient size. In the case in which the contact is breakable, i.e. a simple contact where the force sensor and coupling body are not glued, welded or otherwise rigidly held together, this is facilitated even further, and also permits the force sensor to easily be "parked" in a position out of contact with the coupling body to avoid damage during handling or transit.

Advantageously, said materials testing assembly comprises an interface for mounting said materials testing assembly in a headstock of a materials testing device, said interface being attached to said holders (i.e. to an assembly formed by said holders considered together) via a primary actuator. This primary actuator may be of any convenient type (piezoelectric, screw or similar), and permits moving the assembly of the first and second holders with respect to the headstock.

Advantageously, said materials testing tip is provided on a tip interface adapted to be removably attached to said coupling body, which enables exchange of the materials testing tip alone.

Advantageously, said second holder is arranged to be movable with respect to said first holder at least parallel to said first axis, for instance by said second holder being mounted on said first holder via an actuator. Alternatively, said first holder may be arranged to be movable with respect to said second holder at least parallel to said first axis, for instance by said first holder being mounted on said second holder via an actuator. However, in the absence of such an actuator, relative movement can be obtained manually, or by use of e.g. sawtooth-wave vibrations if the mounting of the movable holder is simply under friction and said primary actuator is present and arranged to generate said vibrations.

As a result, the two holders can be moved relative to one another to position the force sensor in contact with a first face of the coupling body, and this contact can be broken so as to "park" the materials testing assembly in a safe position with the coupling body positioned away from the force sensor so that rough handling or transport will not cause the force sensor to be damaged.

Advantageously said flexure pivot mechanism comprises at least one flexure pivot. In a simple embodiment, this may be a single col-type (i.e. dual-notch) flexure arranged to confer a single degree of freedom in rotation to the coupling body, this rotation being assimilable to a linear degree of freedom at the point of contact with the force sensor due to the small-angle approximation. Alternatively, this may be two or four parallel blade flexures arranged to provide said one degree of freedom linearly. This arrangement is known as an "X-table" and when the flexure pivot mechanism is at rest, the blades extend in planes perpendicular to said first axis. Flexure pivots present particular advantages of being frictionless and not requiring any lubrication, and their inherent elasticity enables suspensions of different stiffnesses to be fabricated.

Advantageously, said force sensor has a rectangular cross-section with a length parallel to said first axis of less than 5 mm, preferably less than 2 mm. Preferably, said force sensor has a length of between 40 µm and 600 µm, a width less than 0.5 mm, preferably less than 200 µm, further preferably between 20 µm and 120 µm, and a thickness less than 50 µm, preferably less than 20 µm, further preferably between 100 nm and 10 µm.

The materials testing assembly as defined above can be used with a materials testing device comprising a headstock adapted to face a sample holder adapted to receive a sample, said headstock and said sample holder being arranged to permit relative movement therebetween, said materials testing assembly being supported by said headstock and arranged such that said materials testing tip can cooperate with a sample provided on said sample holder.

The invention also relates to a method of carrying out a materials test comprising steps of:
- providing a materials testing device as defined above;
- positioning said force sensor in contact with said coupling body by relative movement between said first holder and said second holder, for which detection can be automatic via the force sensor or visual with the aid of a microscope and said relative movement can be obtained by moving the second holder with respect to the first holder or vice-versa; subsequently
- positioning said materials testing tip so as to cooperate with a sample provided on said sample holder and carrying out a materials test such as a tensile test, an indentation test, a scratch test, a tribological test or similar.

Advantageously, the contact between the force sensor and the coupling body can be carried out in such a manner as to apply a predetermined pre-stress force.

### Brief Description of the Drawings

Further details of the invention will become more apparent upon reading the following description, with reference to the annexed figures in which:
- Figure 1 is a schematic isometric view of a first embodiment of a materials testing assembly according to the invention;
- Figure 2 is a schematic lateral view of the materials testing assembly of figure 1;
- Figure 3 is a schematic isometric view of the coupling body of figures 1 and 2, together with its suspension;
- Figure 4 is a schematic lateral view of a second embodiment of a materials testing assembly according to the invention;
- Figure 5 is a schematic lateral view of a third embodiment of a materials testing assembly according to the invention;
- Figure 6 is a schematic lateral schematic view of a materials testing device comprising the materials testing assembly of figures 1 and 2;
- Figures 7 is a schematic isometric view of a fourth embodiment of a materials testing assembly according to the invention;
- Figures 8 and 9 are illustrations of different variants of coupling bodies and their suspensions; and
- Figures 10 and 11 are respectively a schematic isometric view and a scematic lateral view of a fifth embodiment of a materials testing assembly according to the invention.

### Embodiments of the Invention

The invention will now be described further in relation to several nonlimiting embodiments.

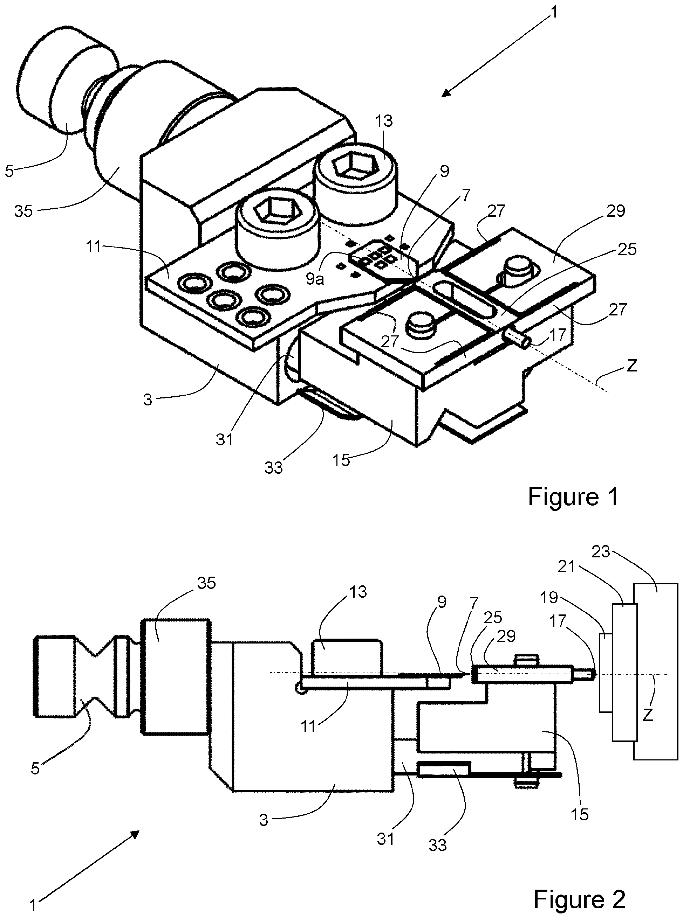

Figures 1 and 2 illustrate a first nonlimiting embodiment of a materials testing assembly 1 according to the invention.

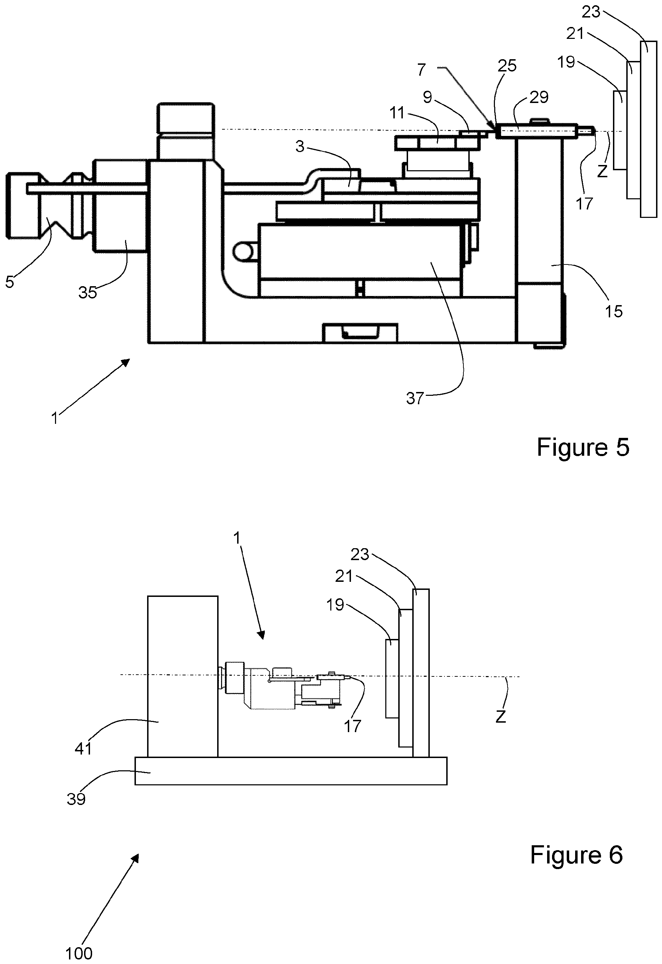

Materials testing assembly 1 comprises a first holder 3, adapted to be attached to a headstock 41 (see figure 6) of a materials testing device 100 (see figure 6) via an interface 5 of any convenient type, and as is generally known. As illustrated, the interface 5 is of rotationally-symmetrical type fixed with a clamping screw, but may simply comprise, or be adapted to cooperate with, one or more bolts, a bayonet attachment system, a clamping system or similar. Alternatively, first holder 3 may be directly integrated into said headstock 41.

First holder 3 supports a force sensor 7, which may be of any convenient type, but the present invention is particularly suitable for use with miniaturised force sensors based around MEMS technology, such as that described in copending patent application EP24176295.4. More generally, such miniaturised force sensors comprise a beam of rectangular cross-section with integrated strain gauges, the beam having a length below 5 mm, preferably below 2 mm, further preferably between 40 µm and 600 µm, and with a width less than 0.5 mm, preferably less than 200 µm, further preferably between 20 µm and 120 µm, and with a thickness less than 50 µm, preferably less than 20 µm, further preferably between 100 nm and 10 µm, supported by a chip 9, e.g. by being fixed thereupon or integrally formed therewith. Chip 9 is not considered as part of the force sensor 7 (it is merely its support), and also comprises electrical pads 9a in electrical connection with strain gauges provided in the force sensor 7 itself, as is generally known.

In the illustrated embodiment, chip 9 is itself mounted on an interface plate 11, which is fixed to the first holder 3 by bolts 13, although again any other convenient fixing arrangement may be used. Interface plate 11 furthermore serves as an electrical interface between electrical pads 9a and an external measurement system such as a general-purpose programmable computer (not illustrated), as is generally known, such that this latter can receive signals generated by said force sensor 7.

It goes without saying that other types and arrangements of force sensor 7 fixed to the first holder 3 are possible, and that the present invention is not limited to the force sensor 7 illustrated.

Materials testing assembly 1 furthermore comprises a second holder 15, distinct from the first holder 3 and supporting a materials testing tip 17 of any convenient type such as a tensile test tip, indentation tip, scratch tip, topographic profile measuring tip, tribological test tip etc., of any known shape (Berkovich, flat punch, Vickers, keyhole for tensile tests, etc.) and of any convenient material such as diamond, silicon, metal, etc.

As is generally known, the distal extremity of materials testing tip 17 is adapted to be cooperate with a sample 19 at least in a direction parallel to first axis Z, typically (but not always) perpendicular to said surface. Sample 19 (illustrated as an indentation/scratch/tribological test sample) is provided on a sample holder 21 of any convenient type, which is itself mounted on a sample base 23, which may be displaceable with respect to the materials testing tip 17 parallel to the first axis Z, and/or perpendicular thereto, and/or in rotation about first axis Z and/or about any other axis. As a result, tensile tests, indentation tests and/or scratch tests and/or tribological tests can be carried out.

The holders 3, 15 are arranged so as to permit a relative translation between the first holder 3 and the second holder 15, and hence between the force sensor 7 and the materials testing tip 17, this displacement being parallel to a first axis Z, which generally intersects the force sensor 7 and the distal extremity of the materials testing tip 17.

The materials testing tip 17 is hence situated remote from the force sensor rather than being mounted thereupon either directly or indirectly.

In order to transmit force between the materials testing tip 17 and the force sensor 7, a coupling body 25 is provided. In the illustrated embodiment, the coupling body 25 extends along the first axis 25, and has a first face, here corresponding to a first extremity thereof, adapted to be in contact with the force sensor 7, and a second face, here corresponding to a second extremity thereof, which supports the materials testing tip 17 either fixedly or removably via a tip interface which may be glued, force-fitted, clamped or otherwise reversibly fixed to the coupling body 25. The contact between the force sensor 7 and the coupling body 25 is preferably breakable, i.e. there is simply a superficial contact between these elements without any form of fixing one to the other. However, it is not to be excluded that the contact may alternatively be made semi-permanent or permanent by glue, solder or another arrangement such as a clamping arrangement.

Coupling body 25 is itself supported on said second holder 15 so as to have substantially only one degree of freedom, parallel to the first axis Z. By "substantially one degree of freedom", it is meant that the stiffness along all other axes of translation and about all axes of rotation is at least 20 times, preferably at least 50 times, further preferably at least 100 times, the stiffness parallel to the first axis Z. Typically, this is in the region of 30-70 times.

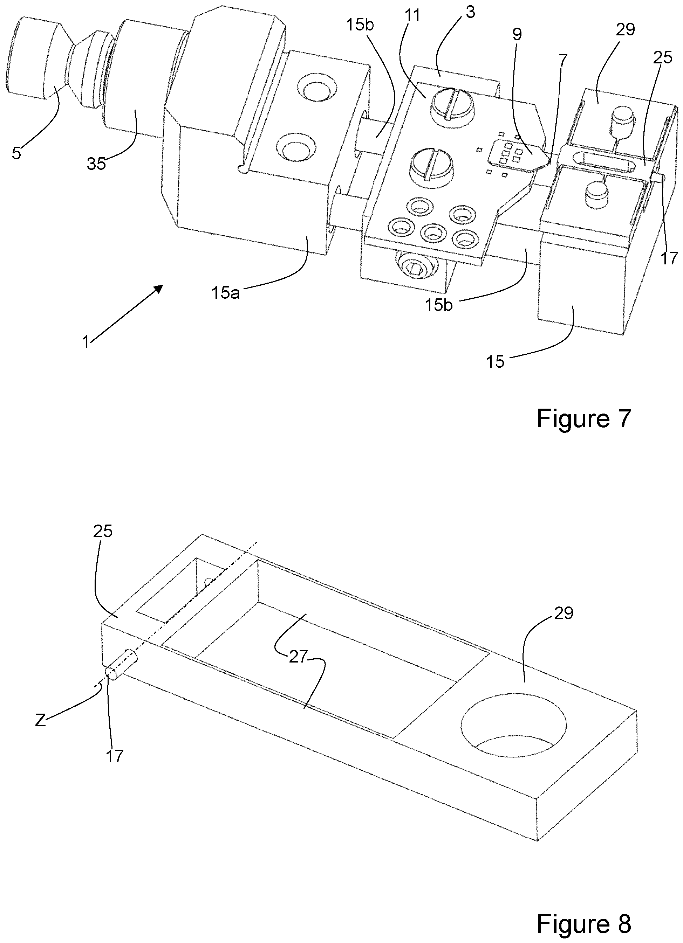

To this end, in the illustrated embodiment coupling body 25 extends along the first axis Z and is supported by four parallel blade flexures arranged as a so-called X-table, the blade flexures 27 being situated in planes which are perpendicular to the first axis Z when they are in their natural rest position, as illustrated, such an arrangement avoiding parasitic displacements and/or rotations along and/or around other axes than the first axis Z. Other configurations for supporting the coupling body 25 are also possible, and several other non-limiting embodiments will be discussed below in connexion with figures 8-11.

Blade flexures 27 extend from the coupling body 25 to a pair of mounting bases 29, arranged either side of the coupling body 25 in planes extending parallel to the first axis Z and adapted to be fixed to second holder 15 by any suitable arrangement such as via bolts, clamping or similar.

As noted above, second holder 15 is movable with respect to the first holder 3 at least parallel to the first axis Z (typically exclusively parallel to said first axis Z), and to this end, the first holder 13 is provided with at least one rail or rod 31 (namely a pair of parallel rods 31 in the illustrated embodiment) to which the second holder 15 is clamped by a suitable clamping arrangement of any convenient type 33. The inverse arrangement, according to which the rail(s) or rod(s) are provided on the second holder 15 and the clamping arrangement 33 is provided on the first holder 3, is also possible, as are any other suitable arrangements.

The clamping arrangement 33 may be arranged to clamp rigidly, or may be arranged to permit relative motion of the second holder 15 with respect to the first holder 3 under friction. The user can hence position the second holder 15 with respect to the first holder 3 such that the distal extremity of the force sensor 7 is in contact with a face of the coupling body. This can be carried out manually, or via an actuator such as a screw actuator, piezoelectric actuator or similar. In the latter case, if the clamping arrangement 33 permits movement under friction, a piezoelectric actuator may be arranged to vibrate at least the second holder 15, or even the assembly of both holders 3, 15, with a saw-tooth wave in order to generate a stick-slip movement at the clamping arrangement and hence to move the second holder 15 along the first axis Z with respect to the first holder 3, in either direction.

In order to move the entirety of the assembly of both holders 3, 15, and hence the materials testing tip 17, with respect to the interface and hence the headstock 41, a primary actuator 35 of any convenient type (e.g. screw, piezoelectric, etc.) is provided, arranged to displace the assembly of both holders 3, 15, and hence the materials testing tip, along the first axis Z.

In the case that the primary actuator 35 is piezoelectric, it may be used to carry out the above-mentioned stick-slip actuation in order to displace the second holder 15 with respect to the first holder 3 along the first axis Z as described above, which is a particularly interesting solution since it permits not only displacing the entire assembly of both holders 3, 15 along the first axis Z, but also the second holder 15 with respect to the first holder 3, with a single actuator.

It should be noted that the presence of the primary actuator 35 is not obligatory, since it is possible to displace the assembly of both holders 3, 15 via the headstock 41 and its own actuators, or simply to displace the sample 19.

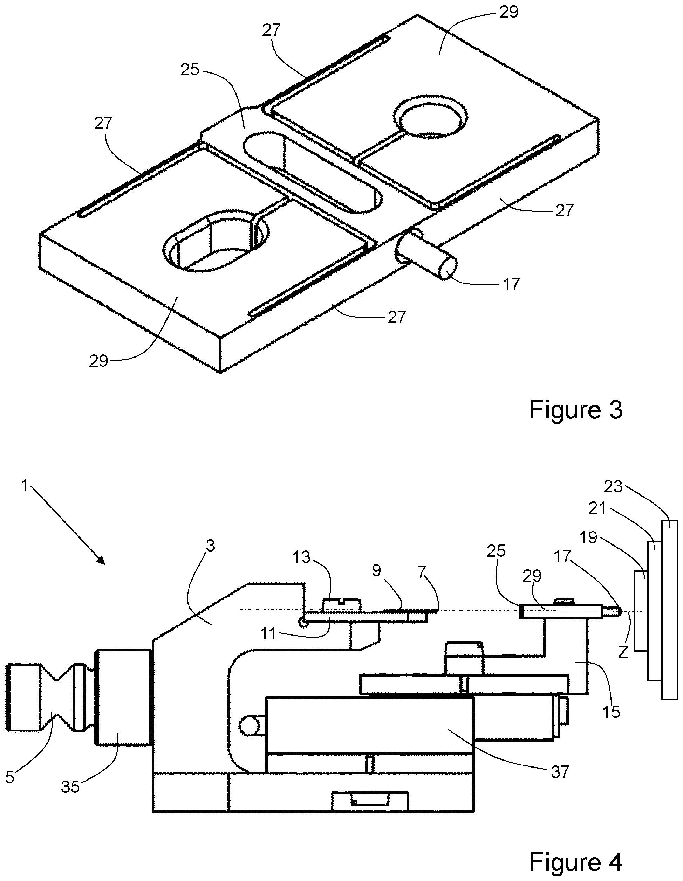

Figure 4 illustrates a second embodiment of a materials testing assembly 1 according to the invention, in a position in which the force sensor 7 is not in contact with the coupling body 25. The components of the materials testing assembly 1 of the second embodiment which are in common or are equivalent to with those of the first embodiment are indicated with the same reference signs, and the second embodiment will be described in terms of the differences with the first embodiment, all other features remaining substantially unchanged except insofar as necessary to accommodate said differences.

In this embodiment, first holder 3 supports the second holder 15 via a secondary actuator 37 of any convenient type (screw, piezoelectric, etc.) arranged so as permit controlled displacement of the second holder 15 with respect to the first holder 3 parallel to the first axis Z independently of other actuators.

Figure 5 illustrates a third embodiment of a materials testing assembly 1 according to the invention, in a position in which the force sensor 7 is in contact with the coupling body 25 and to which the same comments as for the second embodiment apply.

The materials testing assembly 1 of the third embodiment differs from that of the first and second embodiments in that the second holder 15 is rigidly connected to the primary actuator 35 (or to the interface 5 if first actuator is not present as part of the materials testing assembly 1 of the invention), whereas the first holder 3 is mounted on the second holder via secondary actuator 37.

Figure 7 illustrates a fourth embodiment of a materials testing assembly 1 according to the invention, which differs from the preceding embodiments in that the second holder 15 is in two parts, with a base part 15a affixed to the first actuator 35 and joined to its main part 15 by one or more rails or rods 15b of any convenient shape, resulting in a fixed relationship between the main part 15 supporting the coupling body 25 and the actuator 35. The first holder 3 is mounted movably upon the rails 15b, and is hence slidably movable with respect to the coupling body 25 so as to be able to position the force sensor 7 in contact therewith and to withdraw it therefrom.

The same comments as above regarding actuation of the movements of the first holder 3 with respect to the second holder 15 apply, and this arrangement is particularly suited for ultrasonic stick-slip operation.

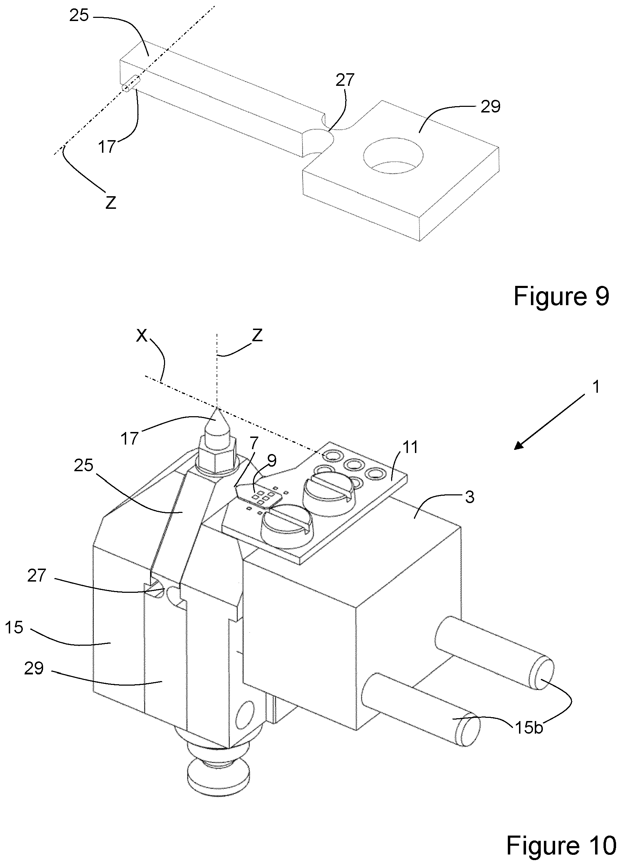

Figures 8 and 9 illustrate variants of coupling bodies 25 and their suspensions 27. In figure 8, the arrangement is similar to in the previous figures, except that blade flexures are only provided on one side of the coupling body 25. This arrangement exhibits a small parasitic movement of the coupling body 25 towards its mounting base 29, but at the small amplitudes used in practice (typically of the order of 10 nm or less), this is negligible and can be ignored.

It should also be noted that the blade flexures of the suspension 27 can be replaced by other equivalent flexure pivots, such as pairs of cols (narrow necked sections) or short blade flexures situated at opposite ends of substantially rigid bars, as is generally known, and this equally applies to the embodiments of figures 1-5.

Figure 9 illustrates a particularly simple arrangement, where the suspension 27 is a single col, the one degree of freedom of the coupling body being in rotation about this col 27, with the force sensor 7 interacting with the coupling body 25 substantially in line with the tip 7 or in any case proximate to the free end of the coupling body 25. Again, in view of the small amplitudes used in practice (typically of the order of 10 nm or less in this configuration), this rotation approximates to a linear displacement of the distal end of the coupling body along the first axis due to the well-known small-angle approximation, and hence the coupling body transmits force from the materials testing tip 17 to the force sensor 7 substantially along the first axis (the Z axis in the arrangement illustrated).

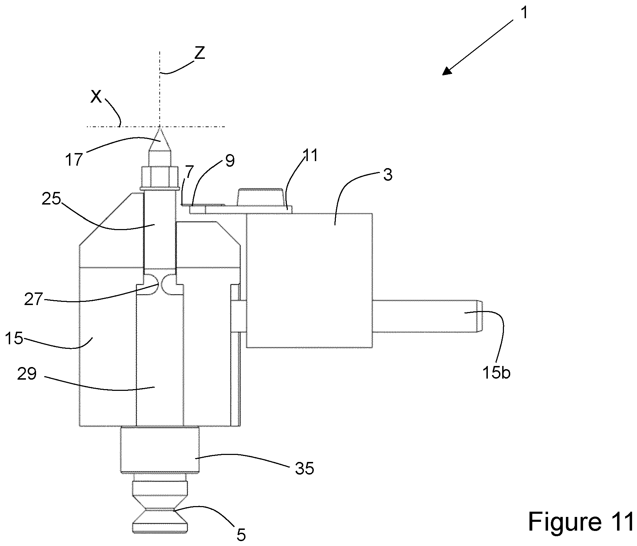

Figures 10 and 11 illustrate a fifth embodiment of a materials testing device according to the invention, arranged to measure tangential force during a scratch or tribological test, i.e. a force parallel to the X axis along which the tip will be moved relatively to the sample (or vice-versa) during a scratch or tribological test.

In this arrangement, the second holder 15 is attached to the actuator 35, and the first holder 3 is movably mounted upon a pair of rods or rails 15b extending from the second holder 15 in a direction parallel to the X axis.

Coupling body 25 is pivotally mounted to its mounting base 29 by a suspension 27 defined by a col so as to be displaceable in rotation about an axis perpendicular to both the Z and X axes, with substantially only this one degree of freedom.

Materials testing tip 17 is mounted on a lateral face of the coupling body 25, and force sensor 7 is arranged to be brought into contact with an opposite lateral face of the coupling body 25 at a point proximate to its distal extremity, i.e. its free extremity, typically in line with the materials testing tip 17, by moving the first holder 3 along the rails 15b by any convenient form of actuator, as discussed above in the context of the other embodiments.

Due to the small amplitude of rotation of the coupling body 25 about the axis of rotation defined by the suspension 27, the materials testing tip 17 typically being displaced by a distance of 100 nm at most, the coupling body transmits force to the force sensor 7 substantially parallel to the X axis at its point of contact with the force sensor 7.

In view of the foregoing, since the materials testing tip 17 is situated remotely from the force sensor 7, it is independent therefrom, and it is hence possible to use a macro-sized tip 17 with a micro-sized force sensor 7 without difficulty. The tip 17 can be easily exchanged, either by being detached from the coupling body 25 and replaced, or by exchanging the coupling body 25 entirely. Since the second holder 15 can be moved with respect to the first holder 3 along the first axis X, Z (as appropriate), the force sensor 7 can be "parked" out of contact with the coupling body 25, thereby preventing damage in transit, during handling, setup etc. This permits the use of extremely small, and hence extremely sensitive, force sensors 7, while limiting the risk of damage thereto since these are often fragile.

Furthermore, exchange of the coupling body 25 for one with a stiffer suspension 27 (considered according to the single degree of freedom) permits reducing the overall sensitivity of the force sensor 7 and hence provides flexibility in terms of the range of forces that can be measured without needing to replace the force sensor 7 itself. Conversely, exchange of force sensors 7 is facilitated, again permitting flexibility in terms of the range of forces to be measured, the type of sensor etc.

Figure 6 illustrates schematically a materials testing device 100 comprising a materials testing assembly 1 according to the invention, here illustrated with the first embodiment but any other materials testing assembly according to the invention can also be used.

Materials testing device 100 comprises, as is generally known, a base frame 39, upon which is mounted a sample base 23 as described above and a headstock 41 supporting a materials testing assembly 1 according to the invention such that the materials testing tip 17 can cooperate with a sample 19. The headstock 41 and/or the sample base 23 is arranged to move at least parallel to the first axis Z, and optionally also according to one or both axes perpendicular thereto, as is generally known.

As noted above, the materials testing assembly 1 can be arranged such that the force sensor 7 is not in contact with the coupling body 25, e.g. during assembly, transport or similar.

In order to bring the materials testing assembly 1 into an operative condition so as to be able to carry out a materials test on a sample 19, contact must be established between the force sensor 7 and the coupling body 25. Depending on the exact configuration, various methodologies can be used.

In the case of the first and second embodiments, the second holder 15 can be displaced such that the coupling body 25 is made to approach the force sensor 7, until contact and/or a desired level of prestress force is detected by the force sensor 7 or optically via a microscope. This can be done manually, and/or with use of the various actuators 35, 37 as discussed above, and once this is done, the force sensor and the coupling body may be fixed to each other by glue, solder, a clamping arrangement or similar, in the case in which the contact is not a simple, breakable contact. The assembly of the first and second holders 3, 15 can then be displaced parallel to the first axis X or Z, as appropriate, in order to carry out the materials test in question.

In the case of the third embodiment, the fourth embodiment or the fifth embodiment, the first holder 3 is displaced such that the force sensor 7 is made to approach the coupling body 25 until contact and/or a desired prestress force is achieved.

In the specific case of the first embodiment, the assembly of the first and second holders 3, 15 may be driven by the headstock 41 and/or by the primary actuator 35 so as to press the second holder 15 or a rigid part of the mounting bases 29 against a rigid part of the materials testing device in which the materials testing assembly 1 of the invention is mounted, so as to cause the second holder 15 to slide with respect to the first holder 3 until contact is achieved between the force sensor 7 and the coupling body 25 as before. The assembly of the first and second holders 3, 15 is then withdrawn, and the materials test can be carried out.

In all cases, if a tensile test is to be carried out by means of a suitable tip 17 interface, the desired prestress force is a maximum force, and the force applied in tension to the sample is the difference between the prestress force and the measured force, which reduces as the tensile test is carried out.

Although the invention has been described in terms of specific embodiments, variations thereto are possible without departing from the scope of the inventio as defined by the appended claims.

## Claims

1. Materials testing assembly (1) comprising:
- a first holder (1) supporting a force sensor (7) adapted to measure force parallel to a first axis (Z; X);
- a second holder (15) supporting a coupling body (25) supported by a suspension (27) adapted to provide substantially only one degree of freedom of movement of said coupling body (25),
wherein said coupling body (25) has a first face adapted to be in contact with said force sensor (7) and a second face situated opposite to said first face and supporting a materials testing tip (17) adapted to cooperate with a sample (19), said coupling body (25) being arranged to transmit force to said force sensor (7) substantially parallel to said first axis (Z; X).

2. Materials testing assembly (1) according to the preceding claim, wherein said contact is a breakable contact.

3. Materials testing assembly (1) according to any preceding claim, comprising an interface (5) for mounting said materials testing assembly in a headstock (41) of a materials testing device (100), said interface (5) being attached to said holders (3, 15) via a primary actuator (35).

4. Materials testing assembly (1) according to the preceding claim, wherein said materials testing tip (17) is provided on a tip interface adapted to be removably attached to said coupling body (25).

5. Materials testing assembly (1) according to any preceding claim, wherein said second holder (15) is arranged to be movable with respect to said first holder (3) at least parallel to said first axis (Z).

6. Materials testing assembly (1) according to claim 5, wherein said second holder is (15) mounted on said first holder (3) via a secondary actuator (37).

7. Materials testing assembly (1) according to claims 3 and 5, wherein said second holder (15) is mounted to said first holder (3) on at least one rail or rod (31) and is movable under friction parallel to said first axis (X; Z).

8. Materials testing assembly (1) according to one of claims 1-4, wherein said first holder (3) is arranged to be movable with respect to said second holder (15) at least parallel to said first axis (X; Z).

9. Materials testing assembly (1) according to claim 6, wherein said first holder (3) is mounted on said second holder (15) via a secondary actuator (37).

10. Materials testing assembly (1) according to claims 3 and 8, wherein said first holder (3) is mounted to said second holder (15) on at least one rail or rod (31) and is movable under friction.

11. Materials testing assembly (1) according to any preceding claim, wherein said flexure pivot suspension (27) comprises at least one flexure pivot.

12. Materials testing assembly (1) according to any preceding claim, wherein said force sensor (7) has a rectangular cross-section with a length parallel to said first axis (Z) of less than 5 mm, preferably less than 2 mm.

13. Materials testing device (100) comprising:
- a headstock (41) adapted to face a sample holder (21) adapted to receive a sample (19), said headstock (41) and said sample holder (21) being arranged to permit relative movement therebetween;
- a materials testing assembly (1) according to any preceded claim supported by said headstock (41) and arranged such that said materials testing tip (7) can cooperate with a sample (1) provided on said sample holder (21).

14. Coupling body (25) for a materials testing assembly (1) according to any of claims 1-11, arranged to support said materials testing tip (17) on a first face thereof and to transmit force to said force sensor (7) via a second face opposite to said first face, said coupling body (25) being arranged to be mounted to said second holder (15) via at least one flexure pivot (27) arranged to confer substantially only one degree of freedom of movement to said coupling body (25).

15. Method of carrying out a materials test comprising steps of:
- Providing a materials testing device (1) according to claim 13;
- Positioning said force sensor (7) in contact with said coupling body (25) by relative movement between said first holder (3) and said second holder (15); subsequently
- Positioning said materials testing tip (17) so as to cooperate with a sample (19) provided on said sample holder (19) in order to carry out a materials test.

16. Method according to the preceding claim, wherein said force sensor (7) is positioned in contact with said coupling body (25) so as to apply a predetermined pre-stress force thereto.
